## Europäisches Patentamt

## European Patent Office

## Office européen des brevets

(19)

(11) Veröffentlichungsnummer: **0 134 394**
**B1**

(12) # EUROPÄISCHE PATENTSCHRIFT

(45) Veröffentlichungstag der Patentschrift:
**29.06.88**

(21) Anmeldenummer: **84103888.8**

(22) Anmeldetag: **07.04.84**

(51) Int. Cl.⁴: **G 01 L 9/04,** G 01 L 1/22,
G 01 L 1/26

(54) **Messumformer mit Dehnungsmessstreifen.**

(30) Priorität: **15.07.83 DE 3325539**

(43) Veröffentlichungstag der Anmeldung:
**20.03.85 Patentblatt 85/12**

(45) Bekanntmachung des Hinweises auf die Patenterteilung:
**29.06.88 Patentblatt 88/26**

(84) Benannte Vertragsstaaten:
**CH DE FR GB IT LI NL**

(56) Entgegenhaltungen:
**CH-A-434 803**
**DE-A-3 004 031**
**FR-A-2 490 814**
**US-A-3 869 906**

(73) Patentinhaber: **VDO Adolf Schindling AG,
Gräfstrasse 103, D-6000 Frankfurt/Main (DE)**

(72) Erfinder: **Kant, Bernhard, Berliner Strasse 9, D-6236
Eschborn (DE)**
Erfinder: **Porth, Wolfgang, Röhrborngasse 70,
D-6000 Frankfurt/Main 60 (DE)**

(74) Vertreter: **Könekamp, Herbert, Dipl.- Ing., Sodener
Strasse 9, D-6231 Schwalbach (DE)**

## Beschreibung

Die Erfindung bezieht sich auf einen Meßumformer mit zumindest einem Biegebalken, auf dem eine Dehnungsmeßstreifenanordnung appliziert ist. Ein solcher Meßumformer ist zum Beispiel in der DE-OS-2 916 427 beschrieben.

Meßumformer, in denen eine Dehnungsmeßstreifenanordnung auf eine elastische Deformation von Elementen anspricht, die einer mechanischen Belastung ausgesetzt sind, dienen zur Messung von Kraft, Drehmoment, Gewicht oder Druck. Moderne Meßumformer enthalten eine Vielzahl von beispielsweise vier Dehnungsmeßeinrichtungen, die in die vier Zweige einer vollen elektrischen Brückenschaltung geschaltet werden. Um eine Grundabstimmung des Meßumformers zu ermöglichen, ist es gemäß der eingangs genannten DE-OS-2 916 427 bekannt, einzelne Abschnitte von elektrischen Leiterbahnen der Brückenschaltung durch abtrennbare Abschnitte unterschiedlichen Querschnittes zu überbrücken. Dadurch lassen sich in den überbrückten Bereichen unterschiedliche Widerstände erreichen, so daß der Meßumformer auf elektrischem Wege abstimmbar ist. Der Bereich, innerhalb dem auf diese Weise die Abstimmung verändert werden kann, ist jedoch relativ klein. Oftmals besteht das Bedürfnis, Meßumformer für unterschiedliche Meßbereiche einzusetzen und diese dabei möglichst wenig zu verändern. Häufig sind auch die Toleranzen von Meßumformern so groß, daß mit elektrischen Mitteln kein Abgleich möglich ist.

Aus der DE-A-3 004 031 ist ein Meßumformen der eingangs genannten Art bekannt. Die Stege, auf denen die Dehnungsmeßstreifen angeordnet sind, sind durch parallel zu ihnen geführte Einschnitte in den Kolben verlängert. Die Herstellung der Einschnitte erfolgt vor Applikation der Dehnungsmeßstreifen auf die Biegebalken.

Der Erfindung liegt die Aufgabe zugrunde, einen Meßumformer der eingangs genannten Art zu entwickeln, der in einem besonders großen Maße hinsichtlich seines Meßbereiches veränderbar und der besonders einfach auf einen Grundwert abzugleichen ist.

Diese Aufgabe wird erfindungsgemäß dadurch gelöst, daß die Elastizität des bereits die Dehnungsmeßstreifenanordnung begrenzenden Biegebalkens an Biegebalkenabschnitten durch Verkleinerung seines tragenden Querschnittes veränderbar ist.

Der Vorteil des erfindungsgemäßen Meßumformers liegt darin, daß nach Montage seine Grundabstimmung besonders einfach verändert werden kann, indem beispielsweise durch Laserstrahlen der tragende Querschnitt des Biegebalkens verkleinert wird. Dank der Erfindung brauchen keine elektrischen Bauteile verändert zu werden. Die Grundabstimmung kann durch entsprechend große Querschnittsveränderuungen über einen sehr großen Bereich verändert werden, so daß der erfindungsgemäße Meßumformer ohne jede Veränderung im elektrischen Bereich für unterschiedliche Anwendungsfälle mit unterschiedlichen Meßbereichen eingesetzt werden kann.

Besonders einfach ist das Verkleinern des tragenden Querschnittes, wenn der Biegebalken durchtrennbare Stegabschnitte hat.

Eine alternative vorteilhafte Möglichkeit der Veränderung des tragenden Querschnittes des Biegebalkens besteht darin, daß der Biegebalken in seiner Länge und/oder Breite veränderbare Einschnitte und/oder Einbuchtungen hat.

Der erfindungsgemäße Meßumformer ist zum Messen von Druck besonders geeignet, wenn er, wie im Anspruch 4 angegeben, ausgebildet ist. Da bei einem solchen Drucksensor die Membran die Druckkammer völlig abdichtet und ausschließlich im Hinblick auf die Dichtfunktion und die geringe Steifigkeit gestaltet sein kann, ist es besonders einfach, einen absolut dichten Drucksensor zu schaffen.

Bei einem als Drucksensor ausgebildeten Meßumformer gemäß der Erfindung ist das Verkleinern des tragenden Querschnittes des Biegebalkens besonders leicht zu bewerkstelligen, wenn der Meßumformer die im Anspruch 5 angegebenen Merkmale ausweist.

Bei einem Meßumformer gemäß Anspruch 6 bilden Federblech und Haltering einen Kraftaufnehmer. Die Steifigkeit dieses Kraftaufnehmers ist vorteilhafterweise groß gegenüber der Membran. Durch den steifen Haltering ist es besonders einfach möglich, eine günstige vorspannungsfreie Einsparung des Federblechs zu realisieren. Die Kombination einer schlaffen Membran mit einem steifen Kraftaufnehmer bewirkt, so daß die durch den Stößel übertragene Kraft in einer sehr exakten Relation zum auf die Membran wirkenden Druck steht und das gesamte System nur wenig Hysterese hat.

Die Erfindung läßt zahlreiche Ausführungsmöglichkeiten zu. Zur Verdeutlichung ihres Grundprinzipes ist eine davon stark schematisch in der Zeichnung dargestellt und wird nachfolgend beschrieben. Es zeigen

Figur 1 einen Längsschnitt durch einen als Drucksensor ausgebildeten Meßumformer nach der Erfindung,

Figur 2 eine Draufsicht auf den Meßumformer gemäß Figur 1.

Der dargestellte Meßumformer besteht aus einem Gehäuse 1, welches beispielsweise in das nicht dargestellte Gehäuse einer Druckkammer einzusetzen ist, in der Druck gemessen werden soll. Nach oben zu ist das Gehäuse 1 durch eine elastische Membran 2 abgeschlossen. Auf dem Gehäuse 1 liegen Kugeln 3, 4 auf, auf denen ein Haltering 5 eines Federblechs 6 abgestützt ist.

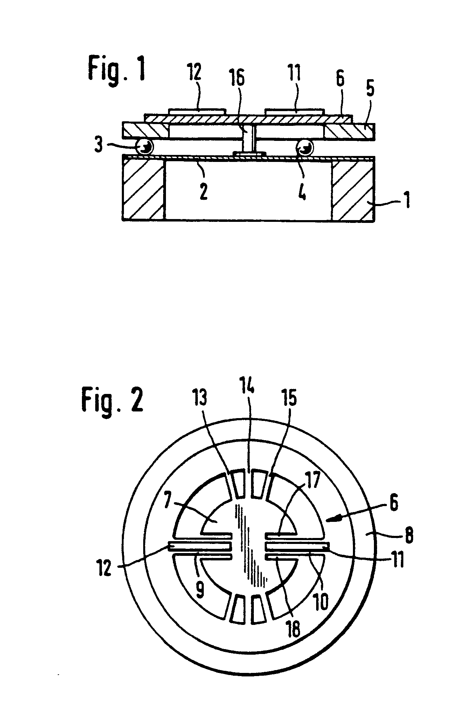

Der Gestaltung des Federblechs 6 ist der Figur 2 zu entnehmen. Es besteht im wesentlichen aus einem konzentrischen kresförmigen Mittelteil 7 und einem ringförmigen Randteil 8. Zwei Biegebalkenabschnitte 9, 10 verbinden das Mittelteil 7 mit dem Randteile. Auf den Biegebalkenabschnitten 9, 10 ist jeweils ein Dehnungsmeßstreifen 11, 12 angeordnet. Abgesehen von den Biegebalkenabschnitten 9, 10 ist das Mittelteil 7 mit dem Randteil 6 durch Stegabschnitte wie zum Beispiel 13, 14, 15 verbunden.

Um bei einem Druckanstieg im Gehäuse 1 das Federblech 6 beeinflussen zu können, sitzt auf der Membran 2 ein Stößel 16, der bei einem Durchwölben der Membran 2 das Mittelteil 7 anhebt. Die Biegebalkenabachnitte 9 und 10 verbiegen sich dann, daß die Dehnungsmeßstreifen 11, 12 den entsprechenden Meßwert zu erzeugen vermögen.

Wenn die Empfindlichkeit des Meßumformers erhöht werden soll, dann ist es lediglich erforderlich, einen oder mehrere der Stegabschnitte 13, 14, 15 beispielsweise mittels Laserstrahlen durchzutrennen. Die Empfindlichkeit des Meßumformers kann alternativ auch dadurch verändert werden, daß beidseitig der Biegebalkenabschnitte 9, 10 Einschnitte 17, 16 mehr oder weniger weit in das Mittelteil 7 geführt werden. Durch solche Einschnitte 17, 16 läßt sich die Länge der Biegebalkenabschnitte 9, 10 verändern.

## Patentansprüche

1. Meßumformer mit zumindest einem Biegebalken, auf dem eine Dehnungsmeßstreifenanordnung appliziert ist, dadurch gekennzeichnet, daß die Elastizität des bereits die Dehnungsmeßstreifenanordnung (11, 12) begrenzenden Biegebalkens an Biegebalkenabschnitten (9, 10) durch Verkleinerung seines tragenden Querschnittes veränderbar ist.

2. Meßumformer nach Anspruch 1, dadurch gekennzeichnet, daß der Biegebalken (9, 10) zur Verkleinerung seines tragenden Querschnittes durchtrennbare Stegabschnitte (13, 14, 15) hat.

3. Meßumformer nach Anspruch 1 oder einem der folgenden dadurch gekennzeichnet, daß der Biegebalken (9, 10) in seiner Länge und/oder Breite veränderbare Einschnitte (17, 18) und/oder Einbuchtungen hat.

4. Meßumformer nach Anspruch 1 oder einem der folgenden, dadurch gekennzeichnet, daß er eine von einer Membran (2) abgedichtete Druckkammer hat und druckkammeraußenseitig ein Stößel (16) gegen die Membran (2) und einen mit dem Biegebalken verbundenen Beuteil (7) abgestützt ist.

5. Meßumformer nach Anspruch 1 oder einem der folgenden, dadurch gekennzeichnet, daß der Biegebalken (9, 10) in einem kreisförmigen Federblech (6) vorgesehen ist, das ein konzentrisches kreisförmiges Mittelteil (7) hat, welches mit zwei speichenartigen

Biegebalkenabschnitten (9, 10) und durchtrennbaren Stegabschnitten (13, 14, 15) mit dem Randteil (8) des Federblechs (6) verbunden ist.

6. Meßumformer nach Anspruch 1 oder einem der folgenden, dadurch gekennzeichnet, daß das Federblech (6) auf einem starren Haltering (5) angebracht ist und dieser Haltering (5) über mehrere Kugeln (3, 4) über die Membran (2) auf dem Gehäuse (1) der Druckkammer abgestützt ist.

## Claims

1. Measuring transducer with at least one flexural beam on which a strain gauge assembly has been put, characterised in that the elasticity of the flexural beam already delimiting the strain gauge assembly (11, 12) can be varied by shortening its stress-bearing cross-section at flexural beam sections (9, 10).

2. Measuring transducer according to Claim 1, characterised in that the flexural beam (9, 10) incorporates removable bridging sections (13, 14, 15) to shorten its stress-bearing cross-section.

3. Measuring transducer according to Claim 1 or one of those following, characterised in that the flexural beam (9, 10) has variable cut-outs (17, 18) and/or indentations in its length and/or width.

4. Measuring transducer according to Claim 1 or one of those following, characterised by having a pressure chamber that is sealed off by a diaphragm (2) and that on the outside of the pressure chamber a plunger (16) rests against the diaphragm (2) and a component (7) connected to the flexural beam.

5. Measuring transducer according to Claim 1 or one of those following, characterised in that the flexural beam (9, 10) is provided in a circular spring plate (6) having a concentric circular central portion (7) connected to the peripheral portion (8) of the spring plate (6) by two spoke-like flexural beam sections (9, 10) and removable bridging sections (13, 14, 15).

6. Measuring transducer according to Claim 1 or one of those following, characterised in that the spring plate (6) is mounted on a rigid retaining ring (5) and said retaining ring (5) rests via several balls (3, 4) on the casing (1) of the pressure chamber via the diaphragm (2).

## Revendications

1. Transducteur de mesure comportant au moins une barrette travaillant à la flexion, sur laquelle est appliqué un dispositif à jauge extensométrique, caractérisé en ce que l'on peut modifier l'élasticité de la barrette, travaillant à la flexion, qui limite déjà le dispositif à jauge extensométrique (11, 12) en diminuant sa section porteuse sur les tronçons de barrette travaillant à la flexion (9, 10).

2. Transducteur selon la revendication 1, caractérisé en ce que la barrette travaillant à la flexion (9 , 10) présente des entretoises (13 , 14 , 15) que l'on peut découper pour diminuer sa section porteuse.

3. Transducteur de mesure selon la revendication 1 ou l'un des suivantes, caractérisé en ce que la barrette travaillant à la flexion (9, 10) présente, dans sa longueur et/ou sa largeur, des entailles (17, 18) et/ou des découpes que l'on peut modifier.

4. Transducteur de mesure selon la revendication 1 ou l'une des suivantes, caractérisé en ce qu'il comporte une chambre de pression, dont une membrane (2) assure l'étanchéité; et en ce qu'un poussoir (16) s'appuie, du côté extérieur de la chambre de pression, contre la membrane (2) et contre un composant (7) lié à la barrette travaillant à la flexion.

5. Transducteur de mesure selon la revendication 1 ou l'une des suivantes, caractérisé en ce que la barrette travaillant à la flexion (9, 10) est prévue dans une rondelle-ressort circulaire (6) qui présente une partie médiane circulaire concentrique qui est reliée à la partie de bordure (8) de la rondelle-ressort (6) par deux tronçons de barrette (9, 10) en forme de rayons et par des entretoises (13, 14, 15) que l'on peut découper.

6. Transducteur de mesure selon la revendication 1 ou l'une des suivantes, caractérisé en ce que la rondelle-ressort (6) est rapportée sur une bague-support rigide (5); et en ce que cette bague support (5) s'appuie, par l'intermédiaire de plusieurs billes (3, 4) placées sur la membrane (2), sur le boîtier (1) de la chambre de pression.

Fig. 1

Fig. 2